# EUROPÄISCHE PATENTSCHRIFT

(11) **EP 0 967 098 B1**
(45) Veröffentlichungstag und Bekanntmachung des Hinweises auf die Patenterteilung: **06.10.2004**
(21) Anmeldenummer: 99108662.0
(22) Anmeldetag: 14.05.1999
(51) Int. Cl.: B60J 5/10

(54) **Fahrzeugklappe mit Schliesszylinder und Kennzeichenleuchte**
Tailgate for vehicle with cylinder lock and lights for number plate
Hayon de véhicule avec cylindre de fermeture et feux pour plaque d'immatriculation

(30) Priorität: 26.06.1998 DE 19828694
(43) Veröffentlichungstag der Anmeldung: 29.12.1999
(73) Patentinhaber: Volkswagen Aktiengesellschaft, 38436 Wolfsburg (DE)
(72) Erfinder: Cramer, Heiko, 38536 Meinersen (DE); Schramm, Thomas, 38442 Wolfsburg (DE); Meyer, Dieter, 38442 Wolfsburg (DE)

(56) Entgegenhaltungen:
- DE-U- 8 601 922
- GB-A- 2 216 072
- PATENT ABSTRACTS OF JAPAN vol. 015, no. 339 (M-1152), 28. August 1991 (1991-08-28) & JP 03 132443 A (NISSAN MOTOR CO LTD), 5. Juni 1991 (1991-06-05)
- PATENT ABSTRACTS OF JAPAN vol. 1997, no. 09, 30. September 1997 (1997-09-30) & JP 09 136572 A (HONDA MOTOR CO LTD), 27. Mai 1997 (1997-05-27)

## Beschreibung

Die Erfindung betrifft eine Fahrzeugklappe gemäß dem Oberbegriff des Patentanspruchs 1.

Betrachtet man den bevorzugten Einsatzfall, nämlich bei einer Heckklappe eines Kraftfahrzeugs, so erfolgt die Montage bei Verwendung eines gemeinsamen Trägers von außen her. Dies hat eine ganze Reihe von Nachteilen zur Folge:

Zum einen kann der Träger durch Unbefugte leicht entfernt werden. Nach Entfernen dieses gemeinsamen Trägers besteht die Gefahr, daß der Entriegelungsmechanismus der Heckklappe freiliegt und betätigt werden kann, wodurch Unbefugte in das Fahrzeug eindringen können. Weiterhin müssen für jede Auslegungsvariante, d.h. bei unterschiedlichen Anbringungsstellen von Schließzylinder und/oder Kennzeichenleuchte für verschiedene Fahrzeugmodelle oder verschiedene Länder, unterschiedliche Träger verwendet werden, da gleichsam blind vorgesehene Aufnahmestellen, die jeweils nicht belegt sind, von außen sichtbar wären.

Der Erfindung liegt die Aufgabe zugrunde, mit einfachen, keinen zusätzlichen Aufwand erforderlichen Maßnahmen eine gattungsgemäße Fahrzeugklappe zu schaffen, die diebstahlund einbruchsicher ist und die Möglichkeit bietet, für unterschiedliche Fahrzeugmodelle und/oder Länder vorbereitete Träger einzusetzen.

Die erfindungsgemäße Lösung dieser Aufgabe besteht in den kennzeichnenden Merkmalen des Hauptanspruchs, eine vorteilhafte Ausbildung der Erfindung beschreibt der Unteranspruch.

Ein besonderer Vorteil der Erfindung ist darin zu sehen, daß sie die gestellte Aufgabe ohne zusätzlichen Aufwand und ohne Erschwerung der Montage löst, nämlich einfach dadurch, daß der Träger von innen an die Fahrzeugklappe angeschraubt oder sonstwie befestigt wird.

Damit sind die Befestigungsstellen nicht nur von außen unsichtbar, sondern auch von außen unzugänglich, so daß die Diebstahlsgefahr entfällt. Außerdem kann ein und derselbe Träger für unterschiedliche Auslegungen Verwendung finden, da nicht belegte, zur Aufnahme des Schließzylinders und/oder der Kennzeichenleuchte vorbereitete Stellen durch entsprechende Gestaltung der Fahrzeugklappe, also des Außenblechs, abgedeckt und damit unsichtbar gemacht werden können.

Ein Ausführungsbeispiel der Erfindung für den Fall einer Kraftfahrzeug-Heckklappe wird im folgenden anhand der Zeichnung erläutert. Es zeigen:
- Figur 1: eine Vorderansicht eines Trägers, der mit zwei Kennzeichenleuchten belegt ist, zwischen diesen einen Griffbereich (ggf. mit Berührungssensor) aufweist und ferner einen Schließzylinder trägt,
- Figur 2: die in Figur 1 bei II-II angedeutete Schnittansicht und
- Figur 3: die in Figur 1 bei III-III definierte Schnittansicht.

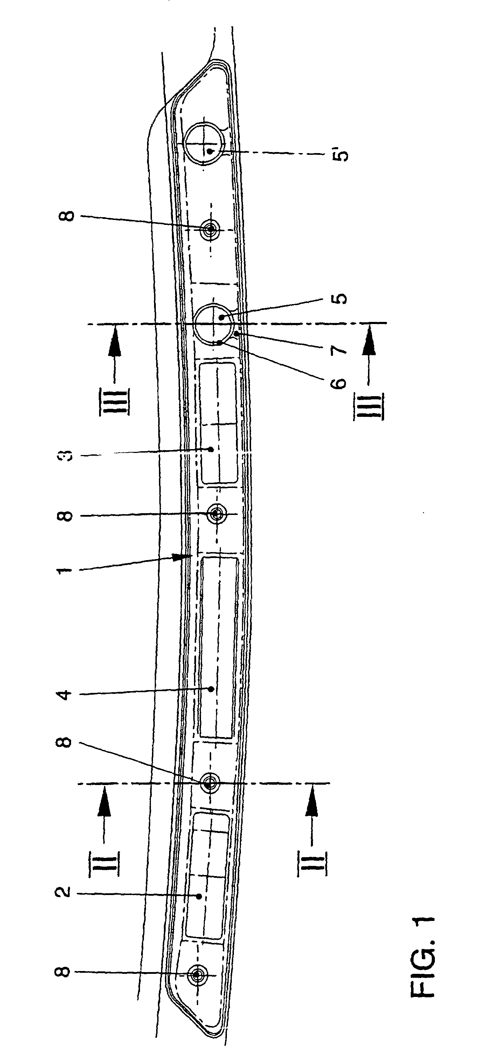

Der allgemein mit 1 bezeichnete Träger ist in diesem Ausführungsbeispiel zur Aufnahme von zwei Kennzeichenleuchten 2 und 3, zwischen denen sich der Griffbereich 4 befindet, und eines Schließzylinders 5 eingerichtet. Vorbereitet ist ferner die Unterbringung des Schließzylinders in einer anderen Lage, die bei 5' angedeutet ist. Der Träger 1 ist im wesentlichen eben ausgeführt, jedoch hat er im Bereich der Stellen zur Aufnahme des Schließzylinders 5 jeweils eine rahmenartige Verstärkung 6 und eine Verstärkungsrippe 7. Bei 8 ist er zur Befestigung am Außenblech der in Figur 1 nicht gezeichneten Klappe des Fahrzeugs eingerichtet; in diesem Ausführungsbeispiel handelt es sich um Durchgangslöcher für an das Außenblech angeschweißte Schrauben.

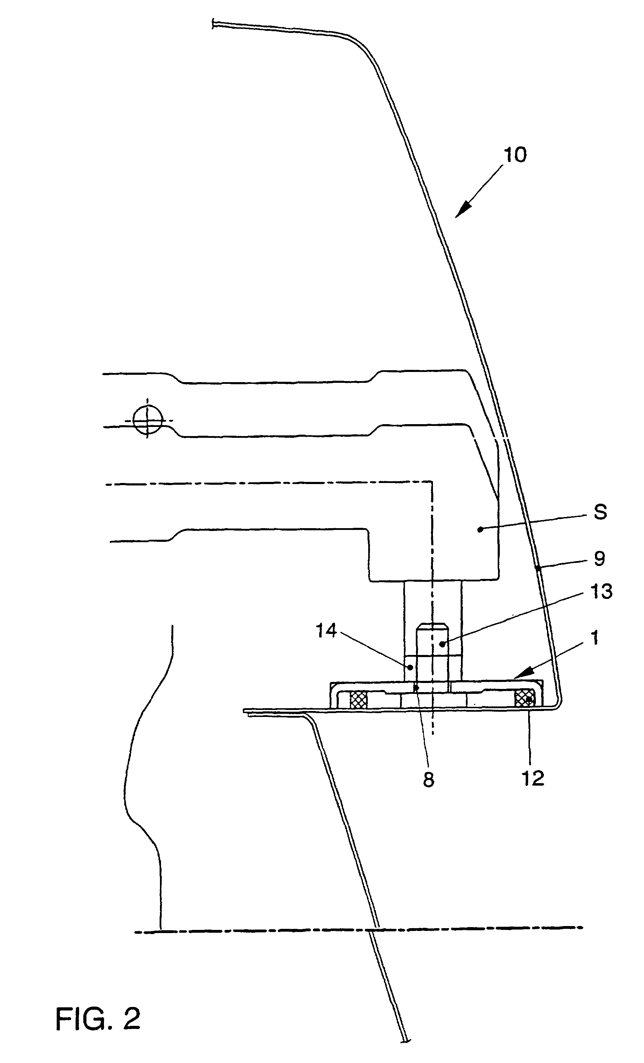

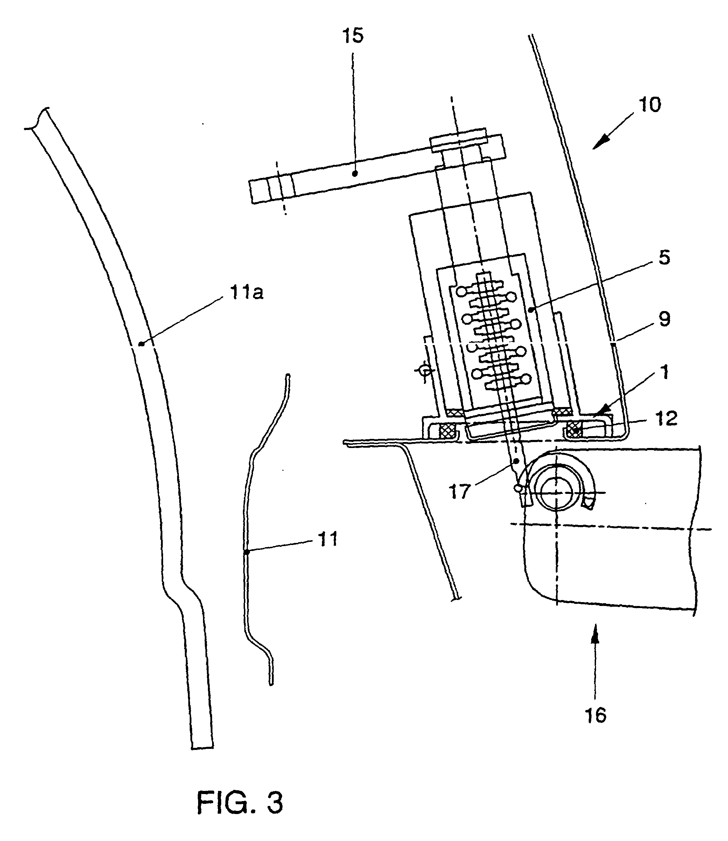

Wie bereits ausgeführt, ist der Träger zur Unterbringung des Schließzylinders 5 an unterschiedlichen Stellen eingerichtet, d.h. für unterschiedliche Fahrzeugtypen vorbereitet. Im eingebauten Zustand des Trägers ist die jeweils nicht belegte Stelle, d.h. hier die Stelle 5', von außen her nicht sichtbar, da der Träger 1, wie nunmehr anhand der Figuren 2 und 3 erläutert wird, von innen gegen das in den Figuren 2 und 3 allgemein mit 9 bezeichnete Außenblech der Heckklappe 10 (mit dem Innenblech 11 und der Verkleidung 11a) gesetzt ist.

An den erforderlichen Stellen besitzt das Außenblech 9 Ausnehmungen. Wie insbesondere aus Figur 2 ersichtlich, ist der Träger 1 unter Zwischenfügung der umlaufenden Dichtung 12 mittels Schraubverbindungen gehalten, die an das Außenblech 9 angeschweißte Schraubenbolzen 13 sowie Muttern 14 enthalten, die mittels eines Schraubers S nach Entfernen der Innenverkleidung 11a auf die Schraubenbolzen 13 aufgezogen werden; die Schraubenbolzen durchsetzen die bereits in Figur 1 dargestellten Ausnehmungen 8.

Während Figur 2 einen Schnitt durch einen Befestigungsbereich zeigt, läßt Figur 3 die Verhältnisse im Bereich des Schließzylinders 5 erkennen. An dem Arm 15 ist ein Bowdenzug angeschlossen, der in üblicher Weise zum Verschluß der Heckklappe führt, damit eine mechanische Entriegelung der Klappe vorgenommen werden kann. Bei dieser nach unten weisenden Einbaulage des Trägers 1 und damit des Schließzylinders 5 kann, wie in Figur 3 dargestellt, der Einsatz eines an sich bekannten Schlüssels 16 mit abknickbarem Bart 17 sinnvoll sein.

Mit der Erfindung ist demgemäß eine durch ihre Einfachheit bestechende Lösung der oben definierten Aufgabe geschaffen.

## Patentansprüche

1. Fahrzeugklappe (10) mit Schließzylinder (5) für einen Klappenverschluß und zumindest einer Kennzeichenleuchte (2, 3), wobei der Schließzylinder (5) und die zumindest eine Kennzeichenleuchte (2, 3) auf einem gemeinsamen Träger (1) angeordnet sind, **dadurch gekennzeichnet, daß** der Schließzylinder (5) und die zumindest eine Kennzeichenleuchte (2,3) auf der Rückseite des gemeinsamen Trägers (1) angeordnet sind, der mit seiner Vorderseite auf einer Rückseite eines Bereichs der Klappe (10) aufliegend von außen unzugänglich an diesem montiert ist.

2. Fahrzeugklappe nach Anspruch 1, **dadurch gekennzeichnet, daß** der gemeinsame Träger (1) zur Aufnahme des Schließzylinders (5) und/oder der Kennzeichenleuchte (4) an verschiedenen Stellen (5') ausgebildet ist und der Bereich der Klappe (10) Abdeckungen für die jeweils nicht belegten Stellen (5') bildet.

## Claims

1. Vehicle flap (10) having a lock cylinder (5) for a flap closure, and at least one number plate light (2, 3), the lock cylinder (5) and the at least one number plate light (2, 3) being arranged on a common support (1), **characterized in that** the lock cylinder (5) and the at least one number plate light (2, 3) are arranged on the rear side of the common support (1) which is fitted with its front side resting on a rear side of a region of the flap (10) on the said region in a manner such that it is inaccessible from the outside.

2. Vehicle flap according to Claim 1, **characterized in that** the common support (1) is designed to accommodate the lock cylinder (5) and/or the number plate light (2,3) at different points (5'), and the region of the flap (10) forms coverings for the points (5') which are not occupied in each case.

## Revendications

1. Hayon de véhicule (10) avec cylindre de fermeture (5) pour fermeture de hayon et avec au moins un feu d'éclairage (2, 3) de la plaque d'immatriculation, le cylindre de fermeture (5) et l'au moins un feu d'éclairage (2, 3) de la plaque d'immatriculation étant disposés sur une structure porteuse (1) commune, **caractérisé en ce que** le cylindre de fermeture (5) et l'au moins un feu d'éclairage (2, 3) de la plaque d'immatriculation sont disposés sur la face arrière de la structure porteuse (1) commune qui est montée sur le hayon en appui par sa face avant sur une face arrière d'une zone du hayon (10) de manière à être inaccessible depuis l'extérieur.

2. Hayon de véhicule selon la revendication 1, **caractérisé en ce que** la structure porteuse (1) commune est formée à différents endroits (5') pour recevoir le cylindre de fermeture (5) et/ou le feu d'éclairage (2, 3) de la plaque d'immatriculation et que la zone du hayon (10) forme des moyens de recouvrement des endroits (5') non occupés respectifs.
